# EUROPÄISCHE PATENTSCHRIFT

(11) **EP 1 848 970 B1**
(45) Veröffentlichungstag und Bekanntmachung des Hinweises auf die Patenterteilung: **25.06.2008**
(21) Anmeldenummer: 06706523.5
(22) Anmeldetag: 01.02.2006
(51) Int. Cl.: G01G 21/24

(54) **WÄGESYSTEM**
WEIGHING SYSTEM
SYSTEME DE PESEE

(30) Priorität: 05.02.2005 DE 102005005369
(43) Veröffentlichungstag der Anmeldung: 31.10.2007
(73) Patentinhaber: SARTORIUS AG, 37075 Göttingen (DE)
(72) Erfinder: KUHLMANN, Otto, 37085 Göttingen (DE); FLEISCHER, Peter, 37085 Göttingen (DE); HELMSEN, Friedrich, 37085 Göttingen (DE); FEHLING, Thomas, 37218 Witzenhausen (DE)
(86) Internationale Anmeldenummer: PCT/EP2006/000831
(87) Internationale Veröffentlichungsnummer: WO 2006/082024

(56) Entgegenhaltungen:
- DE-U1- 8 135 182
- DE-U1- 29 509 829
- GB-A- 743 764
- US-A- 3 063 670
- US-A- 3 700 289

## Beschreibung

Die Erfindung bezieht sich auf ein Wägesystem mit einem Basisbereich, mit einem parallelgeführten Lastaufnehmer, mit mindestens einem Übersetzungshebel, der durch mindestens ein Kreuzfedergelenk am Basisbereich verschwenkbar gelagert ist, und mit einem Koppelelement, das den Lastaufnehmer mit dem kurzen Hebelarm des Übersetzungshebels verbindet.

Wägesysteme dieser Art sind allgemein bekannt und zum Beispiel im deutschen Gebrauchsmuster DE-Gbm 81 35182 beschrieben.

Nachteilig an diesem bekannten Wägesystem ist, dass durch das aus einzelnen Blattfedern aufgebaute Kreuzfedergelenk der Montage- und Justieraufwand relativ hoch ist und dass durch die Befestigung der Blattfedern am Übersetzungshebel und am Basisbereich das Kreuzfedergelenk verspannt werden kann und dadurch Hystereseeffekte, Drift und schlechte Langzeitkonstanz verursacht werden können.

Um diese Probleme zu entschärfen, ist es zum Beispiel aus der US 3 700 289 bekannt, ein Kardangelenk so zu gestalten, dass in einem äußeren Rohr durch Bohrungen die horizontalen Federstege des Kreuzfedergelenkes erzeugt werden und in einem inneren Rohr in entsprechender Weise die vertikalen Federstege.

Beim konzentrischen Zusammenfügen der beiden Rohre entstehen auf diese Weise Kreuzfedergelenke. Aber auch hier ist der Fertigungs- und Montageaufwand hoch, da die Kreuzungspunkte der horizontalen und der vertikalen Federstege sehr genau zueinander ausgerichtet sein müssen, um Zwangskräfte beim Verschwenken zu vermeiden.

Weiter ist es aus der US 3 063 670 bekannt, ein Kreuzfedergelenk mit einer senkrechten und zwei waagerechten Blattfedern aus einem würfelförmigen Block durch Fräsungen herauszuarbeiten. Dazu sind jedoch Bahnfräsungen aus vier verschiedenen Richtungen mit relativ großem Zerspanungsvolumen notwendig, so dass die Fertigung zeitaufwändig ist.

Aufgabe der Erfindung ist es daher, ein verbessertes Kreuzfedergelenk für ein Wägesystem der eingangs genannten Art anzugeben, das einfach herstellbar ist und möglichst keine Hysterese zeigt.

Erfindungsgemäß wird dies erreicht durch ein Wägesystem mit einem Basisbereich, mit einem parallelgeführten Lastaufnehmer, mit mindestens einem Übersetzungshebel, der durch mindestens ein Kreuzfedergelenk am Basisbereich verschwenkbar gelagert ist, und mit einem Koppelelement, das den Lastaufnehmer mit dem kurzen Hebelarm des Übersetzungshebels verbindet, wobei das Kreuzfedergelenk, zumindest ein Teil des Übersetzungshebels und zumindest ein Teil des Basisbereiches monolithisch aus einem Block herausgearbeitet sind und das Kreuzfedergelenk durch vier waagerechte, parallele Bohrungen erzeugt ist, die ringförmig so nebeneinander angeordnet sind, dass zwischen benachbarten Bohrungen jeweils ein dünner Steg verbleibt, sowie durch zusätzliche Schlitze vom Rest des Blockes getrennt ist.

Durch die monolithische Bauweise müssen die einzelnen Federn des Kreuzfedergelenkes nicht verschraubt, verschweißt oder in anderer Weise mit dem Basisbereich und dem Übersetzungshebel verbunden werden, sondern entstehen durch die vier Bohrungen und die Schlitze aus dem Block, sodass das Einbringen von Spannungen beim Zusammenfügen von vornherein vermieden wird.

Die monolithische Bauweise von Wägesystemen ist an sich bereits aus dem Gebrauchsmuster DE 295 09 829 U1 bekannt; dort sind für die Lagerung des Übersetzungshebels jedoch keine Kreuzfedergelenke vorgesehen, sondern vertikale Einzelfedern. Einzelfedern lassen sich viel leichter monolithisch integrieren, da bei ihnen keine Kreuzungspunkte von Federelementen auftreten. Hinweise auf eine monolithische Bauform von Kreuzfedergelenken lassen sich aus dem oben angegebenen Gebrauchsmuster nicht entnehmen. Außerdem sind Einzelfedern bezüglich Transportsicherheit der Wägesysteme sehr viel kritischer als Kreuzfedern, sodass sie Kreuzfedergelenke häufig nicht ersetzen können.

Vorteilhafte Ausgestaltungen ergeben sich aus den Unteransprüchen.

Die Erfindung wird im Folgenden anhand der schematischen Zeichnungen beschrieben. Dabei zeigt:
- Fig. 1: ein Wägesystem in perspektivischer Ansicht,
- Fig. 2: die für die Erfindung wesentlichen Teile des Wägesystems in einer ersten Ausführungsform in perspektivischer Ansicht,
- Fig. 3: die Ausführungsform aus Fig. 2 in perspektivischer Ansicht aus einer anderen Richtung
- Fig. 4: die Ausführungsform aus Fig. 2 und 3 in Seitenansicht
- Fig. 5: die für die Erfindung wesentlichen Teile des Wägesystems in einer zweiten Ausführungsform in perspektivischer Ansicht,
- Fig. 6: die Ausführungsform aus Fig. 5 in Seitenansicht,
- Fig. 7: die für die Erfindung wesentlichen Teile des Wägesystems in einer dritten Ausführungsform in perspektivischer Ansicht,
- Fig. 8: die für die Erfindung wesentlichen Teile des Wägesystems in einer vierten Ausführungsform in perspektivischer Ansicht,
- Fig. 9: die Ausführungsform aus Fig. 8 in perspektivischer Ansicht aus einer anderen Richtung und
- Fig. 10: die Ausführungsform aus Fig. 8 und 9 in Seitenansicht.

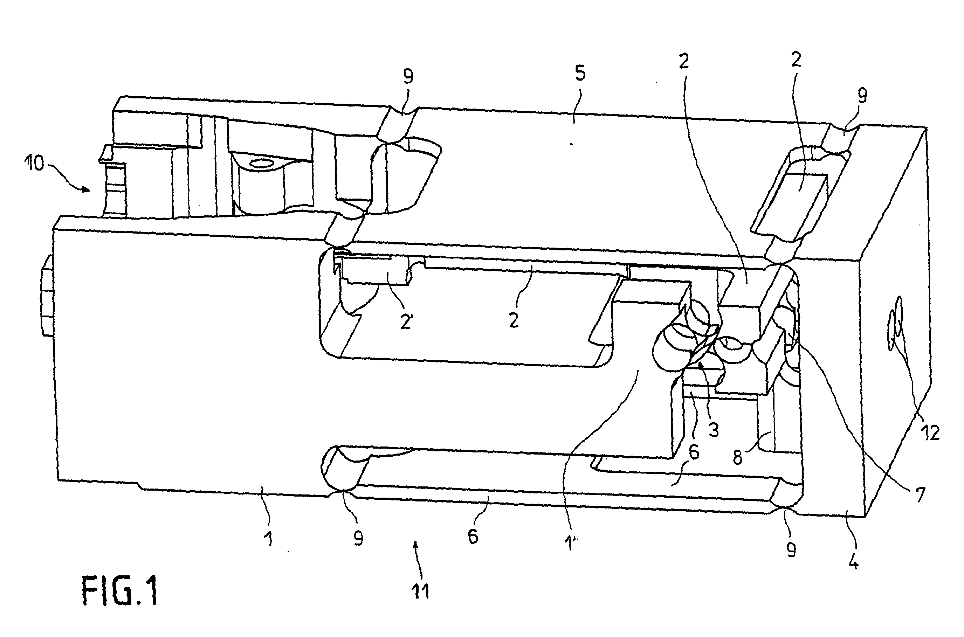

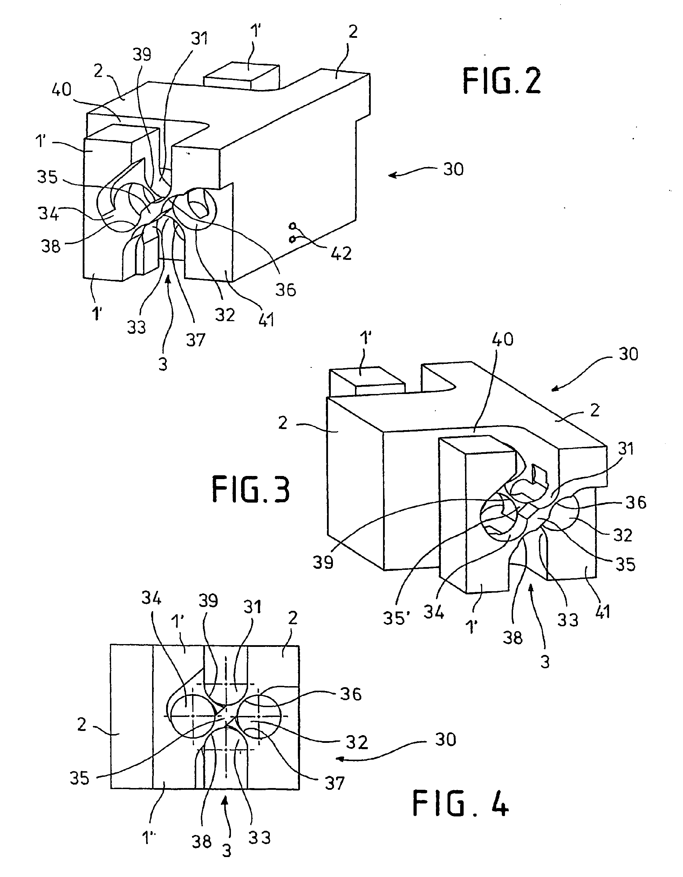

Das in Fig. 1 in einer perspektivischen Ansicht gezeigte Wägesystem 11 besteht aus einem gehäusefesten Basisbereich 1 und einem Lastaufnehmer 4, der durch einen oberen Lenker 5 und einen unteren Lenker 6 in Form einer Parallelführung in senkrechter Richtung beweglich mit dem Basisbereich verbunden ist. Die als Gelenkstellen wirkenden Materialdünnstellen sind mit 9 bezeichnet. Die am Lastaufnehmer 4 angreifende Gewichtskraft des Wägegutes, die zum Beispiel an den Bohrungen 12 eingeleitet wird, wird über einen Vorsprung 8 und ein in Fig. 1 nur teilweise sichtbares Koppelelement 7 auf den kurzen Hebelarm eines Übersetzungshebels 2 übertragen. Der Übersetzungshebel 2 ist durch ein Kreuzfedergelenk 3 an einem vorkragenden Teil 1' des Basisbereiches 1 verschwenkbar gelagert. Am langen Hebelarm 2' des Übersetzungshebels 2 ist die in Fig. 1 nicht erkennbare Spule befestigt. Diese Spule ragt in den Luftspalt eines nicht eingezeichneten Permanentmagnetsystems, das im Freiraum 10 am Basisbereich 1 befestigbar ist. - Der Aufbau des Kreuzfedergelenkes 3 wird im Folgenden anhand der Fig. 2 bis 4,5 und 6,7 beziehungsweise 8 bis 10 erläutert. Aufbau und Funktionsweise der restlichen Teile des Wägesystems sind allgemein bekannt und müssen daher nicht näher erläutert werden.

Die Fig. 2 bis 4 zeigen das Kreuzfedergelenk in einer ersten Ausführungsform. Fig. 2 und 3 sind perspektivische Ansichten aus zwei verschiedenen Richtungen, Fig. 4 ist eine Seitenansicht. Man erkennt aus den Figuren, dass das Kreuzfedergelenk 3 im Wesentlichen durch vier waagerechte Bohrungen 31, 32, 33 und 34 mit gleichem Durchmesser aus dem Materialblock 30 herausgearbeitet ist. In Fig. 4 sind die Mittelpunkte dieser Bohrungen durch dünne Achsenkreuze angedeutet. Diese Mittelpunkte befinden sich in den Ecken eines auf der Spitze stehenden Quadrates. Die Bohrung 31 ist im Bereich des Kreuzfedergelenkes nach oben zu einem Durchbruch erweitert, in gleicher Weise ist die Bohrung 33 nach unten zu einem Durchbruch erweitert. Zwischen den vier Bohrungen bleibt zunächst ein kreuzförmiges Innenteil 35 / 35' stehen, das durch vier dünne Stege 36, 37, 38 und 39 mit dem restlichen Block 30 verbunden ist. In einem nächsten Fertigungsschritt wird durch einen senkrechten Schlitz 40 das Kreuzfedergelenk 3 vom Übersetzungshebel 2 getrennt und durch einen weiteren senkrechten Schlitz, dessen rückwärtige Begrenzung 41 in Fig. 2 und 3 erkennbar ist, in zwei Teilbereiche aufgeteilt. Anschließend werden in dem Teilbereich, der in den Figuren vorne liegt, zwei gegenüberliegende Stege am kreuzförmigen Innenteil 35 weggefräst, sodass das Innenteil nur noch durch die Stege 36 und 38 mit dem Rest des Blockes verbunden ist. In entsprechender Weise werden in dem in den Figuren hinteren Teilbereich zwei gegenüberliegende Stege am kreuzförmigen Innenteil 35' weggefräst, sodass das hintere Innenteil nur noch durch die Stege 37 und 39 mit dem Rest des Blockes verbunden ist.

In der beschriebenen Weise sind zwei getrennte, kreuzförmig angeordnete Federelemente entstanden, nämlich das in den Figuren vordere Federelement 36 / 35 / 38 mit den Stegen 36 und 38 als Federgelenkdünnstellen und das in den Figuren hintere Federelement 37 / 35' / 39 mit den Stegen 37 und 39 als Federgelenkdünnstellen. Beide Federelemente zusammen bilden das Kreuzfedergelenk 3.

Die Geometrie des Kreuzfedergelenkes ist im Vorstehenden zum besseren Verständnis anhand einer Herstellungsreihenfolge beschrieben. Diese Reihenfolge ist jedoch nur eine von verschiedenen Möglichkeiten, die erfindungsgemäße Struktur des monolithischen Kreuzfedergelenkes zu erzeugen.

Wesentlich ist, dass durch die vier waagerechten Bohrungen vier Stege erzeugt sind, von denen für jedes Federelement jeweils zwei entfernt sind und zwei benutzt werden. Dadurch ist das Kreuzfedergelenk erst mit vertretbarem Aufwand monolithisch herstellbar. Der Aufbau jedes Federelementes aus zwei dünnen Stegen, die als Gelenkstellen wirken, macht das Kreuzfedergelenk außerdem unempfindlicher gegenüber Fertigungstoleranzen, da die insgesamt vier Gelenkstellen bei der Bewegung des Kreuzfedergelenkes Fertigungsabweichungen leichter ausgleichen.

In den Fig. 2 bis 4 ist nicht nur im vorderen Bereich des Materialblockes 30 ein Kreuzfedergelenk erzeugt, sondern in entsprechender Weise sind im hinteren Bereich des Blockes hinter dem Übersetzungshebel 2 ebenfalls zwei kreuzförmig angeordnete Federelemente erzeugt. Dadurch ist dann der Materialblock 30 in einen Basisbereich 1' und einen Übersetzungshebel 2 unterteilt, die durch zwei Kreuzfedergelenke verschwenkbar miteinander verbunden sind.

Der anhand der Fig. 2 bis 4 erläuterte Materialblock 30 kann entweder als Teil eines Wägesystems benutzt werden, indem der Basisbereich 1' an den Basisbereich 1 des Wägesystems angeschraubt wird, der Übersetzungshebel 2 mit einem langen Hebelarm 2' komplettiert wird und am kurzen Hebelarm ein Koppelelement angeschraubt wird (dazu sind in Fig. 2 schematisch zwei Befestigungslöcher 42 angedeutet); oder der Materialblock 30 wird nicht als gesonderter Block gefertigt, sondern wird zusammen mit den restlichen Teilen des Wägesystems aus einem einzigen größeren Block herausgearbeitet, wie es schon in Fig. 1 zeichnerisch dargestellt ist.

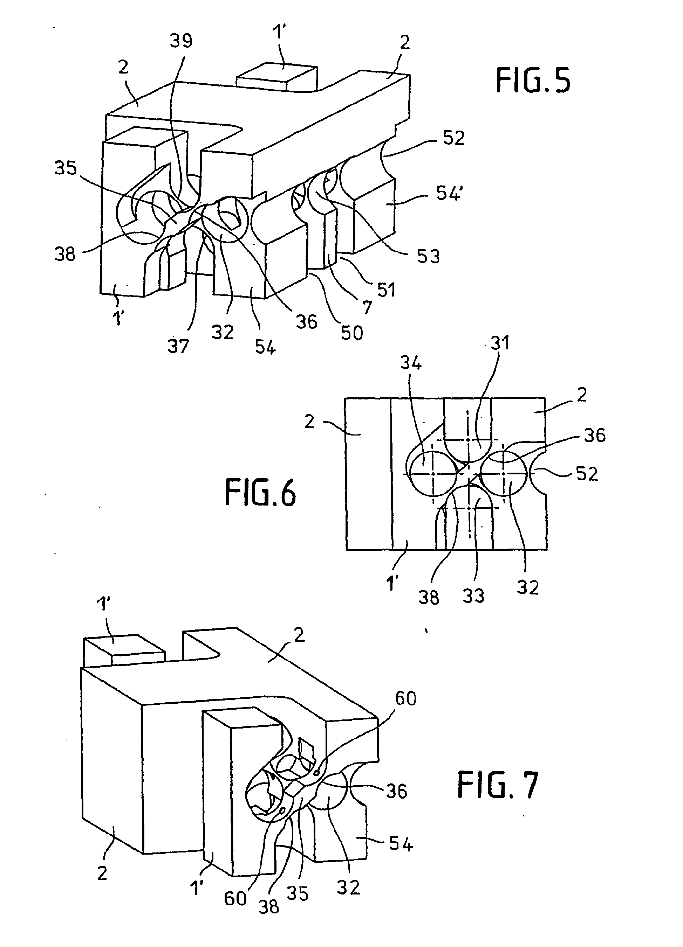

Eine vorteilhafte Ausführungsform, bei der die obere Dünnstelle des Koppelelementes zusammen mit dem Kreuzfedergelenk hergestellt werden kann, ist in den Fig. 5 und 6 dargestellt. Fig. 5 ist eine perspektivische Ansicht, die Blickrichtung entspricht der Blickrichtung in Fig. 2; Fig. 6 ist eine Seitenansicht. Gleiche Teile wie in den Fig. 2 bis 4 sind mit den gleichen Bezugszahlen bezeichnet und werden nicht noch einmal erläutert. Die Ausführungsform gemäß Fig. 5 und 6 weist zwei zusätzliche Schlitze 50 und 51 und eine zusätzliche Bohrung/ Einfräsung 52 auf. Die beiden Schlitze 50 und 51 trennen den oberen Teil des Koppelelementes 7 vom Übersetzungshebel 2 ab. Die Bohrung/Einfräsung 52 erzeugt zusammen mit der für das Kreuzfedergelenk notwendigen Bohrung 32 die obere Gelenkdünnstelle 53 für das Koppelelement. Die Schlitze 50 und 51 sind nur so tief, dass die unteren Teile 54 und 54' des Übersetzungshebels 2 noch stabil mit dem Hauptteil des Übersetzungshebels verbunden bleiben, was in den Figuren jedoch nicht erkennbar ist.

Diese Ausführungsform gemäß Fig. 5 und 6 kann nun leicht zu einem monolithischen Gesamtwägesystem ergänzt werden, das - mit Ausnahme der Spule und des Permanentmagnetsystems - komplett aus einem einzigen Block herausgearbeitet ist. Das in Fig. 1 gezeigte Wägesystem 11 weist eine solche monolithische Bauweise auf.

In Fig. 7 ist eine weitere Ausführungsform gezeigt. Gleiche Teile wie in der Ausführungsform gemäß Fig. 5 und 6 sind wieder mit den gleichen Bezugszahlen bezeichnet und werden nicht noch einmal erläutert. Die Ausführungsform gemäß Fig.7 unterscheidet sich nur durch zusätzliche Ausnehmungen 60 in den Stegen 36, 37, 38 und 39. Diese Ausnehmungen sind durch Bohrungen von oben her erzeugt und so angeordnet, dass sie den Rand der Stege nicht berühren. Dadurch verringern sie die Federkonstante des Kreuzfedergelenkes, ohne dessen Stabilität wesentlich zu verringern.

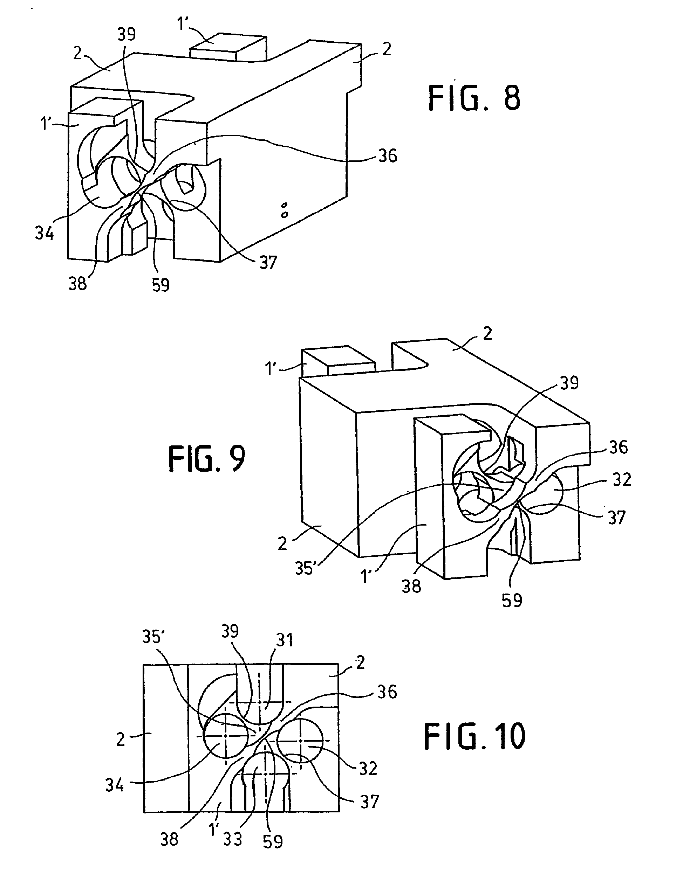

In den Fig. 8 bis 10 ist eine vierte Ausführungsform dargestellt. Die Darstellungsweise entspricht der Darstellungsweise in den Fig. 2 bis 4: Fig. 8 und 9 sind perspektivische Ansichten aus zwei verschiedenen Richtungen, Fig. 10 ist eine Seitenansicht. Gleiche Teile wie in den Fig. 2 bis 4 sind wieder mit den gleichen Bezugszahlen bezeichnet und werden nicht noch einmal erläutert. Bei der Ausführungsform gemäß Fig. 8 bis 10 befinden sich die Mittelpunkte der Bohrungen 31...34 nicht in den Ecken eines Quadrates, sondern in den Ecken eines Rechteckes mit ungleichen Seiten. Man erkennt dies am besten in Fig. 10: Der Abstand der Bohrungen 31 und 34 sowie 32 und 33 ist kleiner als der Abstand der Bohrungen 31 und 32 sowie 34 und 33. Dadurch sind die Stege 36 und 38 dicker als die Stege 37 und 39. Die dünneren Stege 37 und 39 wirken in der schon bei den anderen Ausgestaltungen beschriebenen Weise als Gelenke. Die dickeren Stege 36 und 38 sind deutlich stabiler und das eigentliche Gelenk ist zwischen ihnen durch eine zusätzliche Materialdünnstelle 59 erzeugt. Da sich diese Materialdünnstelle 59 nur in dem in den Figuren vorderen Federelement befindet, lässt sie sich leicht aus dem Block herausarbeiten. Im hinteren Federelement mit den Stegen 37 und 39 wäre solch eine mittige Materialdünnstelle praktisch nicht monolithisch herstellbar. - Diese Ausgestaltung mit den zwei Stegen 37 und 39 als Gelenke im hinteren Federelement und der Materialdünnstelle 59 als einzigem Gelenk im vorderen Federelement hat den Vorteil, dass der kinematische Drehpunkt des Kreuzfedergelenkes wenigstens in einer Richtung exakter festgelegt ist. Dieses Kreuzfedergelenk verhält sich daher ähnlicher als die üblichen nichtmonolithischen Kreuzfedergelenke, bei denen sich die Dünnstellen beider Federelemente direkt im Kreuzungspunkt befinden (wie zum Beispiel in der schon zitierten US 3 700 289). Dies ist besonders dann vorteilhaft, wenn die beiden Federelemente des Kreuzfedergelenkes nicht unter +/-45° zur Horizontalen angeordnet sind - wie in den gezeichneten Beispielen - , sondern horizontal und vertikal angeordnet sind.

### Bezugszeichenliste

- 1: Basisbereich
- 1': Teil des Basisbereiches
- 2: Übersetzungshebel
- 2': Langer Hebelarm des Übersetzungshebels
- 3: Kreuzfedergelenk
- 4: Lastaufnehmer
- 5: Oberer Lenker
- 6: Unterer Lenker
- 7: Koppelelement
- 8: Vorsprung am Lastaufnehmer
- 9: Materialdünnstellen (Gelenke)
- 10: Freiraum für ein Permanentmagnetsystem
- 11: Wägesystem
- 12: Bohrungen
- 30: Materialblock
- 31: Bohrung
- 32: Bohrung
- 33: Bohrung
- 34: Bohrung
- 35, 35': Innenteil
- 36: Steg
- 37: Steg
- 38: Steg
- 39: Steg
- 40: Schlitz
- 41: Schlitzbegrenzung
- 42: Befestigungslöcher
- 50: Schlitz
- 51: Schlitz
- 52: Bohrung/Einfräsung
- 53: Gelenkdünnstelle
- 54, 54': Teile des Übersetzungshebels 2
- 59: Materialdünnstelle
- 60: Ausnehmung

## Patentansprüche

1. Wägesystem mit einem Basisbereich (1), mit einem parallelgeführten Lastaufnehmer (4), mit mindestens einem Übersetzungshebel (2), der durch mindestens ein Kreuzfedergelenk (3) am Basisbereich (1) verschwenkbar gelagert ist, und mit einem Koppelelement (7), das den Lastaufnehmer (4) mit dem kurzen Hebelarm des Übersetzungshebels (2) verbindet, **dadurch gekennzeichnet, dass** das Kreuzfedergelenk (3), zumindest ein Teil des Übersetzungshebels (2) und zumindest ein Teil des Basisbereiches (1') monolithisch aus einem Block herausgearbeitet sind und das Kreuzfedergelenk (3) durch vier waagerechte, parallele Bohrungen (31, 32, 33, 34) erzeugt ist, die ringförmig so nebeneinander angeordnet sind, dass zwischen benachbarten Bohrungen jeweils ein dünner Steg (36, 37, 38, 39) verbleibt, sowie durch zusätzliche Schlitze vom Rest des Blockes getrennt ist.

2. Wägesystem nach Anspruch 1, **dadurch gekennzeichnet, dass** die Mittelpunkte der vier Bohrungen (31,32,33,34) in den Ecken eines Quadrates angeordnet sind, dass die Bohrungen (31, 32, 33, 34) gleichen Durchmesser aufweisen und dass die Kantenlänge des Quadrates um die Stegdicke größer ist als der Durchmesser der Bohrungen.

3. Wägesystem nach Anspruch 2, **dadurch gekennzeichnet, dass** die Seiten des von den Mittelpunkten der vier Bohrungen (31, 32, 33, 34) gebildeten Quadrates um 45° gegen die Horizontale geneigt sind.

4. Wägesystem nach einem der Ansprüche 1 bis 3, **dadurch gekennzeichnet, dass** die vier dünnen Stege (36, 37, 38, 39) durch mindestens einen vertikalen Schlitz in mindestens zwei, in Achsrichtung der Bohrungen nebeneinander liegende Teilbereiche unterteilt sind und dass in jedem Teilbereich zwei gegenüberliegende Stege durch einen Schlitz unterbrochen sind, sodass die verbleibenden beiden gegenüberliegenden Stege (36, 38; 37, 39) ein Federelement bilden, und dass die Federelemente benachbarter Teilbereiche kreuzförmig angeordnet sind.

5. Wägesystem nach Anspruch 4, **dadurch gekennzeichnet, dass** das Kreuzfedergelenk (3) zwei Paar Federelemente (36, 38; 37, 39) aufweist, wobei das eine Paar in Achsrichtung der Bohrungen (31, 32, 33, 34) beabstandet vom anderen Paar angeordnet ist.

6. Wägesystem nach einem der Ansprüche 1 bis 5, **dadurch gekennzeichnet, dass** die Stege durch Ausnehmungen (60), die nicht den Rand der Stege berühren, geschwächt sind.

7. Wägesystem nach einem der Ansprüche 1 bis 6, **dadurch gekennzeichnet, dass** außer dem Basisbereich (1), dem Übersetzungshebel (2) und dem Kreuzfedergelenk (3) auch der Lastaufnehmer (4), die Lenker (5, 6) der Parallelführung und das Koppelelement (7) monolithisch aus einem Block herausgearbeitet sind.

8. Wägesystem nach Anspruch 7, **dadurch gekennzeichnet, dass** eine der vier waagerechten Bohrungen (32) für das Kreuzfedergelenk (3) gleichzeitig eine Dünnstelle des Koppelelementes (7) begrenzt.

## Claims

1. Weighing system with a base region (1), with a load receiver (4) with parallel guidance, with at least one translation lever (2), which is pivotably mounted at the base region (1) by at least one cruciform spring joint (3), and with a coupling element (7) connecting the load receiver (4) with the short lever arm of the translation lever (2), **characterised in that** the cruciform spring joint (3), at least a part of the translation lever (2) and at least a part of the base region (1') are monolithically formed from one block and the cruciform spring joint (3) is formed by four horizontal, parallel bores (31, 32, 33, 34), which are so arranged annularly adjacent to one another that a respective thin web (36, 37, 38, 39) remains between adjacent bores and is separated by additional slots from the rest of the block.

2. Weighing system according to claim 1, **characterised in that** the centre points of the four bores (31, 32, 33, 34) are arranged in the corners of the square, that the bores (31, 32, 33, 34) have the same diameter and that the edge length of the square is greater by the web thickness than the diameter of the bores.

3. Weighing system according to claim 2, **characterised in that** the sides of the square formed by the centre points of the four bores (31, 32, 33, 34) are inclined by 45° relative to the horizontal.

4. Weighing system according to any one of claims 1 to 3, **characterised in that** the four thin webs (36, 37, 38, 39) are subdivided by at least one vertical slot into at least two part regions lying adjacent to one another in axial direction of the bores and that in each part region two opposite webs are interrupted by a slot so that the remaining two opposite webs (36, 38; 37, 39) form a spring element and that the spring elements of adjacent part regions are arranged in cross shape.

5. Weighing system according to claim 4, **characterised in that** the cruciform spring joint (3) comprises a pair of spring elements (36, 38; 37, 39), wherein one pair is arranged at a spacing from the other pair in axial direction of the bores (31, 32, 33, 34).

6. Weighing system according to any one of claims 1 to 5, **characterised in that** the webs are weakened by recesses (60) which do not contact the edge of the webs.

7. Weighing system according to any one of claims 1 to 6, **characterised in that** apart from the base region (1), the translation lever (2) and the cruciform spring joint (3) also the load receiver (4), the links (5, 6) of the parallel guide and the coupling element (7) are monolithically formed from a block.

8. Weighing system according to claim 7, **characterised in that** one of the four horizontal bores (32) for the cruciform joint (3) at the same time bounds a thin point of the coupling element (7).

## Revendications

1. Système de pesée comprenant une zone de base (1), un récepteur de charge (4) guidé en parallèle, au moins un levier de transmission (2) qui est logé de manière pivotante par au moins un pivot à lames flexibles (3) sur la zone de base (1), et un élément de couplage (7) qui relie le récepteur de charge (4) au bras court du levier de transmission (2), **caractérisé en ce que** le pivot à lames flexibles (3), au moins une partie du levier de transmission (2) et au moins une partie de la zone de base (1') sont façonnés de manière monolithique dans un bloc et le pivot à lames flexibles (3) est généré par quatre perçages (31, 32, 33, 34) parallèles horizontaux qui sont disposés en forme d'anneau les uns à côté des autres de telle sorte qu'une traverse (36, 37, 38, 39) mince reste respectivement entre des perçages contigus, ainsi qu'elle est séparée du reste du bloc par des fentes supplémentaires.

2. Système de pesée selon la revendication 1, **caractérisé en ce que** les points centraux des quatre perçages (31, 32, 33, 34) sont disposés dans les angles d'un carré, **en ce que** les perçages (31, 32, 33, 34) présentent le même diamètre et **en ce que** la longueur d'arête du carré est supérieure de l'épaisseur de traverse au diamètre des perçages.

3. Système de pesée selon la revendication 2, **caractérisé en ce que** les côtés du carré formé par les points centraux des quatre perçages (31, 32, 33, 34) sont inclinés de 45° par rapport à l'horizontale.

4. Système de pesée selon l'une quelconque des revendications 1 à 3, **caractérisé en ce que** les quatre traverses (36, 37, 38, 39) minces sont divisées par au moins une fente verticale en au moins deux zones partielles se trouvant l'une à côté de l'autre dans le sens de l'axe des perçages et **en ce que** deux traverses opposées sont interrompues par une fente dans chaque zone partielle, de sorte que les deux traverses (36, 38 ; 37, 39) opposées restantes forment un élément formant ressort, et **en ce que** les éléments formant ressort de zones partielles contiguës sont disposés en forme de croix.

5. Système de pesée selon la revendication 4, **caractérisé en ce que** le pivot à lames flexibles (3) présente deux paires d'éléments formant ressort (36, 38 ; 37, 39), une paire étant disposée à distance de l'autre paire dans le sens de l'axe des perçages (31, 32, 33, 34).

6. Système de pesée selon l'une quelconque des revendications 1 à 5, **caractérisé en ce que** les traverses sont affaiblies par des évidements (60) qui ne touchent pas le bord des traverses.

7. Système de pesée selon l'une quelconque des revendications 1 à 6, **caractérisé en ce que** hormis la zone de base (1), le levier de transmission (2) et le pivot à lames flexibles (3), le récepteur de charge (4), les bras (5, 6) du guidage parallèle et l'élément de couplage (7) sont également façonnés de manière monolithique dans un bloc.

8. Système de pesée selon la revendication 7, **caractérisé en ce que** l'un des quatre perçages (32) horizontaux pour le pivot à lames flexibles (3) délimite en même temps une région amincie de l'élément de couplage (7).
